Europäisches Patentamt

(19) European Patent Office

Office européen des brevets

(11) Veröffentlichungsnummer: **0 088 319**
**B1**

(12) **EUROPÄISCHE PATENTSCHRIFT**

(45) Veröffentlichungstag der Patentschrift:
02.10.85

(51) Int. Cl.⁴: **B 65 G 65/28**

(21) Anmeldenummer: **83101913.8**

(22) Anmeldetag: **26.02.83**

(54) Schaufelrad-Rückladegerät für Schüttguthalden.

(30) Priorität: **04.03.82 DE 3207751**

(43) Veröffentlichungstag der Anmeldung:
**14.09.83 Patentblatt 83/37**

(45) Bekanntmachung des Hinweises auf die Patenterteilung:
**02.10.85 Patentblatt 85/40**

(84) Benannte Vertragsstaaten:
**AT DE FR GB IT**

(56) Entgegenhaltungen:
**DE - A - 1 756 635**
**DE - A - 2 421 628**

(73) Patentinhaber: **Fried. Krupp Gesellschaft mit beschränkter Haftung, Altendorfer Strasse 103, D-4300 Essen 1 (DE)**

(72) Erfinder: **Langner, Alexander, Schillerstrasse 16, D-4100 Duisburg 14 (DE)**

## Beschreibung

Die Erfindung bezieht sich auf ein mit mindestens zwei Schaufelrädern ausgerüstetes Rückladegerät für Schüttguthalden, insbesondere Brückengerät, bei dem die Schaufelräder an einer Haldenfront entlang bewegbar sind.

Bei den bekannten Rückladegeräten der eingangs genannten Art sind die Schaufelräder nebeneinander angeordnet. Die Verwendung mehrerer Schaufelräder vergrößert im allgemeinen die Förderleistung, insbesondere dient sie jedoch dazu, die Durchmischung verschiedener Anteile des eingelagerten Schüttguts zu verbessern. Die Schaufelräder werden dabei am Fuß der Haldenfront hin und her bewegt. Das abzufördernde Schüttgut wird den Schaufelrädern im wesentlichen über verschiedene Zuführeinrichtungen, wie Rechen, Kratzer, Ketten, Schräm- oder andere Löseeinrichtungen, zugeführt. Diese Förder- oder Rüttelbewegungen ausführenden Einrichtungen erfordern oftmals einen erheblichen apparativen Aufwand. Außerdem besteht bei Verwendung dieser Einrichtungen in vielen Fällen die Gefahr, daß die Halde unterschnitten und dadurch das Schaufelrad zugeschüttet wird. Insbesondere bei Schüttgütern von gröberen Stückgrößen, etwa solchen von über 300 mm, bereitet das Zufördern mit diesen Einrichtungen Schwierigkeiten, die sich bei einem größeren, d. h. etwa über 300 mm liegenden Vorschub noch erheblich vergrößern.

Der Erfindung liegt daher die Aufgabe zugrunde, ein Schaufelrad-Rückladegerät zu schaffen, mit dem insbesondere auch gröbere Schüttgüter ohne Schwierigkeiten und sicher aus der Halde abgefördert werden. Diese Aufgabe ist durch die Merkmale des kennzeichnenden Teils des Anspruchs 1 gelöst.

Die Erfindung bringt den Vorteil, daß insbesondere bei hohen Halden die dafür erforderlichen aufwendigen Zuführeinrichtungen wegfallen und daß trotzdem eine gute Durchmischung des Schüttguts erzielt wird.

Weitere, vorteilhafte Ausgestaltungen der Erfindung sind in den Ansprüchen 2 und 3 wiedergegeben.

Es ist zwar bereits bekannt, daß ein Schaufelradbagger mit mehreren Schaufelrädern ausgerüstet ist, die jeweils in unterschiedlicher Höhe arbeiten (deutsche Patentanmeldung 84d 1/03 L8905, bekanntgemacht am 22. 11. 1951); die Schaufelräder dieses nicht für die Rückladung von Schüttgütern bestimmten Geräts sind jedoch nicht über-, sondern nebeneinander angeordnet. Für die Rückladung von hoch aufgehaldeten Schüttgütern ist dieses Gerät nicht bestimmt und auch nicht geeignet.

Ein Ausführungsbeispiel der Erfindung ist in der nachfolgend näher erläuterten Zeichnung schematisch dargestellt. Es zeigt

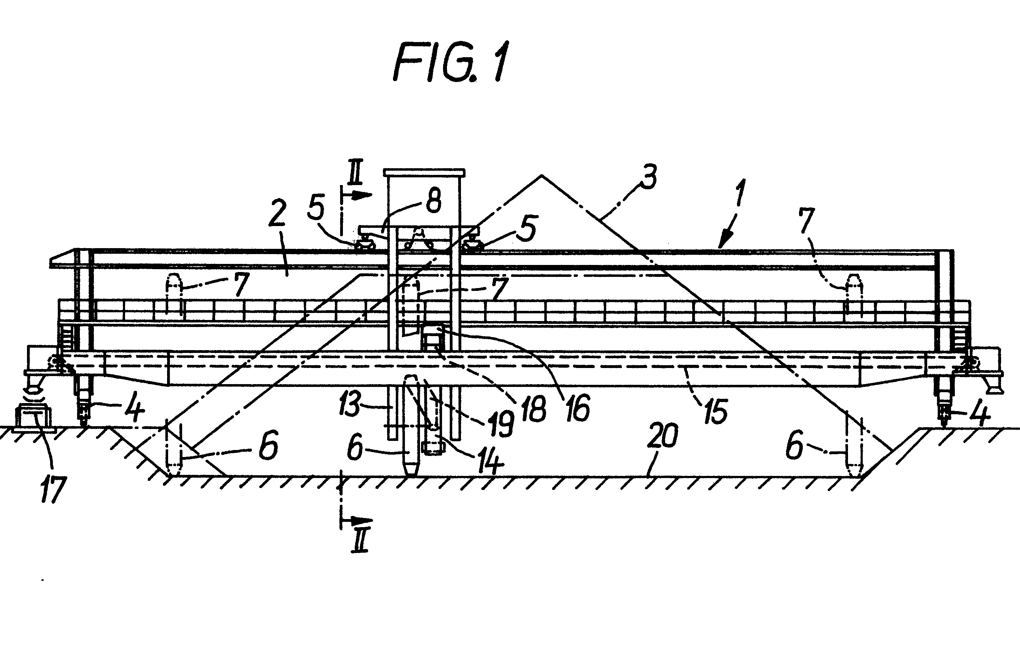

Fig. 1 eine Haldenfront mit einem davor befindlichen Rücklade-Brückengerät und

Fig. 2 einen Schnitt nach der Linie II-II in Fig. 1.

Das Brückengerät 1 weist einen kastenartigen Längsträger 2 auf, der beiderseits der Halde 3 mit Schienenfahrwerken 4 versehen ist. Über Fahrwerke 5 ist ein zwei Schaufelräder 6 und 7 tragender Wagen 8 auf dem Längsträger 2 längsverfahrbar angeordnet.

Die Schaufelräder 6 und 7 sind jeweils am Ende eines Auslegers 9 und 10 gelagert. Die Ausleger 9 und 10 erstrecken sich unter dem Längsträger 2 hindurch und sind an einer Strebe der der Halde 3 abgewandten Seite des Wagens 8 mit einer gemeinsamen horizontalen Achse 11, um die sie sich jeweils um einen geringen Betrag schwenken lassen, angelenkt. Der obere, das Schaufelrad 7 tragende Ausleger 10 ist zur Veränderung seiner Länge teleskopierbar ausgeführt; er wird von einer einerseits an seinem ausfahrbaren Ende und andererseits am Wagen 8 angelenkten Winde 12, die Höhen- und Längenanpassungen ermöglicht, gehalten. Der das untere Schaufelrad 6 tragende Ausleger 9 ist an einer senkrechten Strebe 13 des Wagens 8 gehalten. Der Ausleger 9 ist mit einem Förderband 14 versehen, das am Abwurfende eine auf ein Förderband 15 aufgebende Schurre 16 aufweist. Das reversierbare Förderband 15 erstreckt sich parallel zum Längsträger 2 und beschickt einen neben der Halde verlaufenden Bandförderer 17.

Der Ausleger 10 ist mit einem Förderband 18 versehen, über welches das von dem Schaufelrad 8 abgeworfene Schüttgut über eine Schurre 19 auf das Förderband 14 abgeworfen wird, auf dem es zusammen mit dem vom Schaufelrad 6 zugeführten Schüttgut über das Förderband 15 auf den wegfördernden Bandförderer 17 gelangt. Zum Ausgleich der durch die Längsverschieblichkeit des Auslegers 10 hervorgerufenen Verlagerung des Abwurfsendes der Förderbands 18 ist die Schurre 19 entweder ebenfalls längsverschieblich oder entsprechend verlängert ausgebildet.

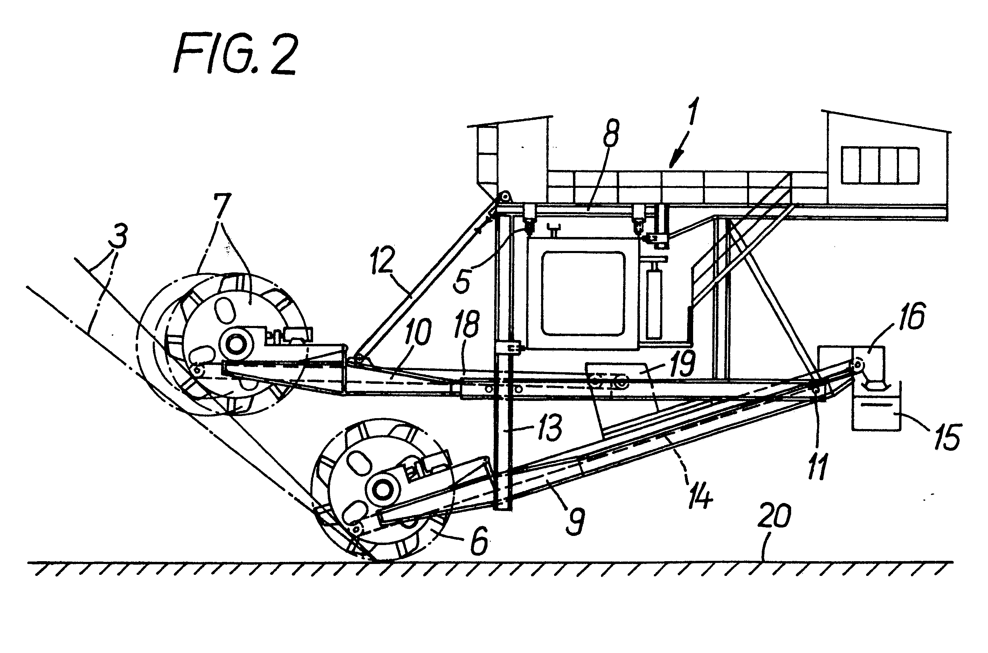

Die Schaufelräder arbeiten wie üblich im Tiefschnitt, wobei das untere Schaufelrad 6 im Bereich des Haldenflurs 20 an der Haldenfront angesetzt und das obere Schaufelrad 7 in zweckmäßigem Abstand über letzterem so an- und eingestellt wird, wie es die jeweiligen Verhältnisse erfordern. Das obere Schaufelrad 7 kann auch zu diesem Zweck während des Betriebes nachgestellt werden. Eine an eine flachere Haldenfront angepaßte Stellung des Schaufelrads 7 ist in Fig. 2 in Strichpunktlinien abgedeutet.

Das neue Brückengerät kann an einem Ende um eine senkrechte Achse schwenkbar für den Einsatz auf einer Rundhalde ausgebildet sein. Außerdem können mehrere, mit übereinander angeordneten Schaufelrädern versehene Wagen eingesetzt werden. Die Zahl der übereinander angeordneten Schaufelräder beträgt in der Regel zwei, richtet sich jedoch nach den Anforderungen des Einzelfalls. Die Anwendung der Erfindung beschränkt sich nicht auf Brückengeräte, sondern bezieht alle geeigneten bekannten Geräte mit ein, die mit den verschiedenen bekannten Fahrwerken oder anderen Fördereinrichtungen versehen sein können.

**Patentansprüche**

1. Mit mindestens zwei Schaufelrädern ausgerüstetes Rückladegerät für Schüttguthalden, insbesondere Brückengerät, bei dem die Schaufelräder an einer Haldenfront entlang bewegbar sind, dadurch gekennzeichnet, daß mindestens zwei Schaufelräder (6, 7) im wesentlichen in ihrer zumindest annähernd quer zur Haldenfront verlaufenden Drehebene in ständiger Zuordnung übereinander angeordnet sind.

2. Rückladegerät nach Anspruch 1, dadurch gekennzeichnet, daß zumindest das bzw. die oberen Schaufelräder (7) über einen Ausleger (10) an dem Rückladegerät (1) angeordnet sind und daß der bzw. die Ausleger in seiner (ihrer) Länge veränderbar ist (sind).

3. Rückladegerät nach Anspruch 2, dadurch gekennzeichnet, daß das bzw. die oberen Schaufelräder (7) das abgetragene Schüttgut über ein in seinem (ihren) Ausleger(n) angeordneten Förderband (18) auf das Förderband (14) des jeweils darunter liegenden Auslegers (9) über eine Schurre (19) abwirft.

**Claims**

1. Back loading appliance, equipped with at least two bucket wheels, for loose bulk material piles, especially bridge-type appliance, in which the bucket wheels are movable along a pile front, characterised in that at least two bucket wheels (6, 7) are arranged one above the other in constant association substantially in their plane of rotation, which extends at least approximately transversely of the front of the pile.

2. Back loading appliance according to claim 1, characterised in that at least the upper bucket wheel or wheels (7) is or are arranged through an extension beam (10) on the back loading appliance (1) and in that the length of the beam or beams is variable.

3. Back loading appliance according to claim 2, characterised in that the upper bucket wheel or wheels (7) discharges or discharge the removed loose bulk material by way of a conveyor belt (8) arranged in its (their) extension beam or beams and by way of a chute (19) on to the conveyor belt (14) of the extension beam (9) lying therebeneath in each case.

**Revendications**

1. Appareil de reprise pour terril de matières en vrac, équipé d'au moins deux roues à godets, en particulier appareil à pont, dans lequel les roues à godets peuvent se déplacer le long d'un front du terril, caractérisé en ce qu'au moins deux roues à godets (6, 7) sont disposées en permanence essentiellement l'une au-dessus de l'autre dans leur plan de rotation orienté au moins approximativement perpendiculairement au front du terril.

2. Appareil de reprise selon la revendication 1, caractérisé en ce qu'au moins la ou les roues à godets supérieurs (7) sont montées sur une flèche (10) de l'appareil de reprise (1) et que la ou les flèches ont une longueur variable.

3. Appareil de reprise selon la revendication 2, caractérisé en ce que la ou les roues à godets supérieurs (7) rejettent les matières en vrac de reprise, par l'intermédiaire d'une bande transporteuse (18) montée dans sa flèche ou dans leurs flèches, sur la bande transporteuse (14) de la flèche sous-jacente (9), par l'intermédiaire d'une goulotte (19).

FIG. 1

FIG. 2